# EUROPEAN PATENT APPLICATION

(11) **EP 3 951 712 A1**
(43) Date of publication of application: **09.02.2022**
(21) Application number: 20189812.9
(22) Date of filing: 06.08.2020
(51) Int. Cl.: G06T 7/11, G06T 7/136, G06T 7/174, G06T 7/254

(54) **PIXEL BASED MOTION DETECTION**

(71) Applicant: Koninklijke Philips N.V., 5656 AG Eindhoven (NL)
(72) Inventor: GARCIA TORMO, Albert, 5656 AE Eindhoven (NL); KOK, Annette, 5656 AE Eindhoven (NL); WUELBERN, Jan Hendrik, 5656 AE Eindhoven (NL); SENEGAS, Julien Thomas, 5656 AE Eindhoven (NL)
(74) Representative: Philips Intellectual Property & Standards

(57) **Abstract**

Disclosed herein is a medical system comprising a memory storing machine executable instructions and a computational system. Execution of the machine executable instructions causes the computational system to: repeatedly receive (200) a stream of acquired images descriptive of a subject, wherein each of the acquired images is formed from pixels; repeatedly calculate (202) at least one statistical measure for each of the pixels; repeatedly generate (204) a pixel state map for each of the sequentially acquired images by assigning a pixel classification to each of the pixels by comparing each of the pixels to the least one statistical measure; repeatedly identify (206) pixel clusters in the pixel state map for each of the sequentially acquired images; and repeatedly provide (208) a motion signal by identifying changes in the pixel clusters between the sequentially acquired images.

## Description

### FIELD OF THE INVENTION

The invention relates to tomographic medical imaging techniques, in particular to the detection of subject motion during imaging.

### BACKGROUND OF THE INVENTION

Various tomographic medical imaging techniques such as Magnetic Resonance Imaging (MRI), Computed Tomography, Positron Emission Tomography, and Single Photon Emission Tomography enable detailed visualization of anatomical structure of a subject. A common feature of all of these imaging modalities is that it takes a significant amount of time to acquire the medical imaging data necessary to reconstruct a medical image. During the acquisition of the medical imaging data the subject may move voluntarily or involuntarily resulting in image corruption or artifacts.

International patent application publication WO2016014718A1 discloses a motion tracking system for dynamic tracking of and compensation for motion of a patient during a magnetic resonance scan comprises a first camera positioned to view an optical marker along a first line of sight; a second camera positioned to view the optical marker along a second line of sight; and a computer system configured to analyze images generated by the first and second cameras to determine changes in position of the optical marker, and to generate tracking data for use by a magnetic resonance scanner to dynamically adjust scans to compensate for the changes in position of the optical marker. The computer system is configured to dynamically adapt its image analysis to utilize images from all cameras that are currently viewing the optical marker.

### SUMMARY OF THE INVENTION

The invention provides for a medical system, a computer program, and a method in the independent claims. Embodiments are given in the dependent claims.

Cameras have been used for the detection of subject motion during medical imaging (for example during tomographic medical imaging). A difficulty with using a stream of images to detect subject motion is that the subject may not be directly visible or only a small portion of the subject may be visible. It may therefore not be possible for an algorithm to properly identify subject motion with so little information.

Embodiments may provide for an improved means of providing a motion signal that is based on the changes in individual pixels. A stream of acquired images is acquired. For each pixel at least one statistical measure is calculated for each pixel. This at least one statistical measure may be calculated using prior images in the stream of acquired images. A pixel state map is then constructed by making a comparison of each pixel to the at least one statistical measure is calculated for that particular pixel. This comparison assigns a pixel classification to each pixel. The pixel classification of each pixel is then used to identify pixel clusters. A pixel cluster is either a group of connected pixels with the same pixel classification or a group of pixels with the same pixel classification that are within a predetermined distance of each other.

In some examples, pixel clusters can be post-processed to sharpen them. In other words, pixels can be added or removed to the cluster even if they do not have the same classification. This is typically done to mitigate noise effects on the clusters and/or simplify the shape of the clusters. For instance, very small clusters which are surrounded by much larger clusters can be incorporated to the large cluster.

As each image of the stream of acquired images is received a new pixel map may be constructed. A change in the pixel clusters for the pixel state map of sequentially acquired images may then be used to generate a motion signal. Various changes in the pixel clusters can be used to generate the motion signal. A simple motion signal can be derived by providing the size (number of pixels) of the largest pixel cluster of a particular type. This type of motion signal is similar to the signal provided by a respiration belt, but it is contactless.

Other signals can be derived from tracking the motion of pixel clusters and the total volume of the pixel clusters. The type of motion can also often be derived from the number, shape, and or position of pixel clusters. In some examples, motion signals can also be derived from the intensity value in the original image of the pixels belonging to a cluster.

In one aspect the invention provides for a medical system that comprises a memory storing machine-executable instructions. The medical system further comprises a computational system. Execution of the machine-executable instructions causes the computational system to repeatedly receive a stream of acquired images descriptive of a subject. The subject may for example be a person or an object. The stream of acquired images may be images that are directly attributed to the subject or they may be descriptive of data which is indirectly imaging the subject. For example, the stream of acquired images could be images of a shadow or other change in light cast indirectly by the subject. In some examples the subject may be objects placed on a patient or person. In other cases, the subject may be a person directly.

Each of the acquired images is formed from pixels. Execution of the machine-executable instructions further causes the computational system to repeatedly calculate and update at least one statistical measure for each of the pixels. For example, the computational system may be programmed to periodically or repeatedly calculate the at least one statistical measure for each of the pixels. In other examples the at least one statistical measure may be calculated as a sliding window. That is to say that the at least one statistical measure is continually updated also. Although this is not necessary, in some instances the statistical measure may only be calculated in certain time or periodic intervals. The at least one statistical measure may for example be a statistical measure such as an upper and lower bound which describe a statistical property of the values for each of the pixels. The at least one statistical measure is calculated individually for each of the pixels.

Execution of the machine-executable instructions further causes the computational system to repeatedly generate a pixel state map for each of the subsequently acquired images by assigning a pixel classification to each of the pixels by comparing each of the pixels to the at least one statistical measure. In this step each pixel is examined and this is then compared to the at least one statistical measure and a pixel classification is then assigned to each of the pixels. This is used to construct the pixel state map. The pixel state map may take different forms in different examples. In one case the pixel state map could for example be an image with colors or other values assigned to the pixels. This may have the advantage that standard image processing algorithms and techniques can be used. In other examples the pixel state map may for example be an array where different discreet values are assigned. The pixel state map may therefore take different forms in different examples.

Execution of the machine-executable instructions further causes the computational system to repeatedly identify pixel clusters in the pixel state map for each of the sequentially acquired images. This for example may be performed in different ways in different examples. If the pixel state map is a single channel or color image then the pixel clusters may for example be identified by using image segmentation methods. In other examples the pixel clusters may be identified by looking for pixels that have an identical or similar pixel classification. For example, groups of pixels above a certain size that are connected and have the same classification or color may be identified as pixel clusters.

Execution of the machine-executable instructions further causes the computational system to repeatedly provide a motion signal by identifying changes in the pixel clusters between the sequentially acquired images. The changes may take different forms in different examples also. For example, in some instances the changes may be a motion or change in position of a particular pixel cluster. In other examples it may be the number, shape, or position of pixel clusters that changes. In some examples it may include determining using the average intensity of the original pixels that correspond to the pixel cluster. In other examples the changes may be a total number of pixels that are assigned to pixel clusters. Various changes in the pixel clusters may also be used to indicate different types of motion and this may also form the basis for providing the motion signal. For example, when a subject breathes only certain portions of the subject may have changes in the pixel clusters. In other cases, the subject may for example sneeze or have large body movements. This may cause a much larger number of pixels to be assigned to a pixel cluster.

In some examples the changes in the pixel clusters may for example be like a translation of the centroid of a pixel cluster or a change in the average value of the pixel cluster. In some examples the motion or translation of pixel clusters is studied across the entire image. For example, although two or more pixel clusters may be distributed throughout the image, for example at different or opposite ends, they may both have a motion or growth or contraction that is similar. In this case they may both contribute to the same motion signal.

This embodiment may be beneficial because it may for example provide a means of monitoring a subject without having to identify particular anatomical or structural landmarks on the surface of a subject. This may for example provide the ability to provide the motion signal even when a very small portion of the subject is visible.

The medical system may take different forms in different examples. In one example the medical system may be a magnetic resonance imaging or another medical imaging system. In other examples the medical system may be a workstation or remote computing system that is used for processing medical images.

In another embodiment execution of the machine-executable instructions further causes the computational system to repeatedly provide a motion classification by determining a size of the pixel clusters. This may for example be the total number of pixels assigned to pixel clusters. It may also be a size or distribution of size of the individual pixel clusters. For example, if there are a number of pixel clusters the size may be the average or other statistical measure of the size of pixel clusters. The size could for example be determined by counting the number of connected pixels within the pixel cluster.

In another embodiment execution of the machine-executable instructions further causes the computational system to repeatedly provide the motion classification by determining a shape of the pixel clusters. One way of defining a pixel cluster would be to identify pixels with an identical pixel classification or within a certain neighborhood or distance within each other. The shape could then be determined by taking an outline of these connected pixels. The shapes could then be matched to a dictionary or predetermined images of pixels for determining the shape. In other examples the distortion of the pixel clusters from a standard shape such as a circle, may be used to assign a measure or number to the shape.

In another embodiment execution of the machine-executable instructions further causes the computational system to repeatedly provide a motion classification by determining a change in the number of pixel clusters. This may for example be the total number of pixel clusters identified within a particular pixel state map.

In another embodiment execution of the machine-executable instructions further causes the computational system to repeatedly provide a motion classification by determining a position change of the pixel clusters. For example, in examining sequential pixel state maps it may be possible to identify pixel clusters which are translations from previous pixel state maps. This change in the position or measure of the average change of position may be used for providing a motion signal. This may for example be very useful in determining respiration or periodic motion of the subject.

In another embodiment the pixel state map is constructed as an intermediate image for each of the acquired images. For example, the pixel state map may be constructed by using the pixel classification to assign a value for each pixel of the intermediate image. The identification of the clusters of pixels in the intermediate range is performed using an image segmentation algorithm. A variety of image segmentation algorithms exist. They can for example look for edges or boundaries in images or use such things as landmarks or even be a trained neural network. Constructing the pixel state map as an intermediate image may therefore provide a means to use existing segmentation algorithms to identify the pixel clusters.

In another embodiment the motion signal is provided by tracking movement of the pixel clusters or groups of pixel clusters in sequential intermediate images. In this embodiment the movement of individual pixel clusters to different positions within the intermediate image or groups of these clusters may be used as an indication to indicate motion of the subject

In another embodiment the motion signal is a time series of a size of the largest cluster identified in the intermediate image. For example, after a pixel state map has been constructed as an intermediate image, the pixel clusters can be identified and then the largest pixel cluster can be identified. The size of the largest cluster may then be assigned to the motion signal. This embodiment may be particularly advantageous because it may be useful for identifying periodic motion of the subject such as respiration. This may for example enable a respiration signal that would be similar to a respiration belt without the use of a respiration belt or without the use of any prior calibration.

In another embodiment the at least one statistical measure comprises an upper expected value and a lower expected value. In this case the upper expected value and the lower expected value may form a which may for example be used to assign the pixel classification, range which the value of the pixels normally varies or oscillates. When the value of the pixel goes outside of the range defined by the lower expected value and the upper expected value then the value of the pixel may have a trend.

In another embodiment the pixel classification comprises a stable classification. In the stable classification the pixel may for example be between the lower expected value and the upper expected value. The stable classification may for example indicate that the pixel does not show motion.

In another embodiment the pixel classification comprises an increasing trend classification indicating a trend that is longer in duration than a predetermined time interval. For example, if the value of the pixel goes above the upper expected value for more than the predetermined time interval then the pixel may be identified as having an increasing trend. This for example could be used to assign a particular color to the intermediate image.

In another embodiment the pixel classification comprises a decreasing trend classification that indicates a decreasing trend that is longer in duration than a predetermined time interval. For example, in one example if the value of a pixel goes below the lower expected value for longer than the predetermined time interval then the decreasing trend classification could be assigned to that pixel for the particular pixel state map.

In another embodiment the pixel classification comprises a flat but increasing trend classification that indicates an increasing trend but shorter in duration than the predetermined time interval. This for example is similar to the increasing trend classification but the trend has been shorter than the predetermined time interval. This may indicate an increase but it may also be noise.

In another embodiment the pixel classification comprises a flat but decreasing trend classification indicating a decreasing trend but shorter in duration than the predetermined time interval. This for example may be similar to the decreasing trend classification but it is not held longer than the predetermined time interval.

In another embodiment the pixel classification comprises a recurrent variation. For example, the value of the pixel may oscillate or vary according to a rhythm or pattern. The identification of this recurrent variation may for example be useful for identifying particular types of motion such as respiration or cardiac pulsation.

In another embodiment the upper expected value and the lower expected value are calculated by applying a statistical model to a predetermined time window and extracting the most frequent values. The predetermined time value may for example be constructed by breaking the time of the acquired images into discreet chunks or length. In other examples the predetermined time may be a sliding time before the generation of the particular pixel state map.

In another embodiment the upper expected value and the lower expected value are calculated by calculating a mean value within the predetermined time window and determining the upper expected value and lower expected value as a difference between the mean value and a most frequent absolute difference between consecutive samples. For example, the most frequent absolute difference could in one example be literally the most frequent difference or it could be a variance or be determined by calculating the mean square of the value of the pixels.

In another embodiment the computational system is configured to repeatedly receive a stream of multiple images. The multiple images may take different forms in different examples. In one example, the multiple images could be from a color camera. The color images may therefore represent three different wavelengths of light. In other examples the multiple images may be a combination of visible and infra-red images. In another embodiment the multiple images may be from a time of flight or from a 3D camera. For example, in a 3D or time of flight camera the pixels may all be a time interval. For one example execution of the machine-executable instructions causes the computational system to repeatedly calculate a single channel image stream from the stream of multiple images. The computational system is configured to process the single channel image stream as the stream of acquired images.

In a different variation the computational system is configured to process each channel of the stream of multiple images independently as individual streams of the acquired images. That is to say each of the channels is handled independently using the above described method. The motion signal is at least partially provided by calculating a correlation between the pixel clusters of each channel of the stream of multiple images then.

In some examples, the stream of acquired images can be pre-processed. In some examples, this may include not only splitting/merging channels (i.e. the multiple images describe above) in multi-channel images or color images. In other examples this may include changing the resolution of the stream of acquired images. This is, create a new image where each pixel is e.g. the average of its surrounding pixels (typically a blur filter). The number of pixels in the new image does not need to be the same than that in the original image. This pre-processed image becomes then the stream of acquired images that are processed by the machine executable instructions.

In another embodiment the medical system further comprises a camera configured for acquiring the stream of acquired images.

In another embodiment the medical system further comprises a medical imaging system configured for acquiring medical imaging data from the subject within an imaging zone. The camera is configured for imaging at least a portion of the imaging zone or for imaging a portion of the subject when the subject is at least partially within the imaging zone. In some examples the camera may be configured for imaging at least a portion of the subject within the imaging zone.

In other examples the camera is configured for imaging a portion of the subject that is outside of the imaging zone. For example, the camera may be used for imaging or monitoring the head of the subject, while medical imaging is performed in the abdomen. Motion events like sneezing (for example) which will corrupt imaging data from the abdomen, can then be detected and inferred from the head motion. This example may be particularly useful for magnetic resonance imaging examinations, because the receive coils may obstruct the view of the camera to the imaged anatomy.

The medical imaging system may for example be a magnetic resonance imaging system, a computed or CT system, a positron emission tomography system, or a single photon emission tomography system.

In another embodiment execution of the machine-executable instructions further causes the processor to reconstruct a medical image from medical imaging data. The processor is configured to modify the reconstruction of the medical image using the motion signal. During the reconstruction of the medical image the motion signal could be used in several different ways. The motion signal could for example be used to divide or classify the medical imaging data. In one example the motion signal is used to gate the medical imaging data. In this case only a portion of the medical imaging data is used.

This may for example be useful in situations where the subject is engaging in a repetitive motion like breathing. In another example, the motion signal is used to exclude all or part of the medical data based on the motion signal. For example, the subject may have been reposing on a subject support and then for a brief period of time was engaged in motion. The motion signal would enable the processor to flag which data may be corrupted by motion of the subject. In some embodiments the medical imaging data may be time stamped so that it may be correlated to a timestamp of the motion signal.

In another embodiment, the computational system is configured to provide the motion signal in real time during acquisition of the medical imaging data. The magnetic resonance imaging system is configured to control the acquisition of the medical imaging data using the motion signal.

In another embodiment the medical imaging system is a magnetic resonance imaging system. The medical imaging data is k-space data. For example, the motion signal may be used to gate the acquisition of the medical imaging data and may for example use the motion signal in a fashion similar to a navigator signal. The motion signal could also be used in a closed control loop, which is used to reacquire particular lines or portions of the medical imaging data that the motion signal indicates could be corrupted due to subject motion.

In another aspect the invention provides for a method of medical imaging. The method comprises repeatedly receiving a stream of acquired images descriptive of a subject. Each of the acquired images is formed from pixels. The method further comprises repeatedly calculating and updating at least one statistical measure for each of the pixels. The method further comprises repeatedly generating a pixel state map for each of the sequentially acquired images by assigning a pixel classification to each of the pixels by comparing each of the pixels to the at least one statistical measure. The method further comprises repeatedly identifying pixel clusters in the pixel state map for each of the sequentially acquired images. The method further comprises repeatedly providing a motion signal by identifying changes in the pixel clusters between the sequentially acquired images. The advantages of this have been previously discussed.

In another aspect the invention provides for a computer program comprising machine-executable instructions for execution by a computational system controlling a medical system. Execution of the machine-executable instructions causes the computational system to repeatedly receive a string of acquired images descriptive of a subject. Each of the acquired images is formed from pixels. Execution of the machine-executable instructions further causes the computational system to repeatedly calculate and update at least one statistical measure for each of the pixels. Execution of the machine-executable instructions further causes the computational system to repeatedly generate a pixel state map for each of the sequentially acquired images by assigning a pixel classification to each of the pixels by comparing each of the pixels to the at least one statistical measure. Execution of the machine-executable instructions further causes the computational system to repeatedly identify pixel clusters in the pixel state map for each of the sequentially acquired images. Execution of the machine-executable instructions further causes the computational system to repeatedly provide a motion signal by identifying changes in the pixel clusters between the sequentially acquired images.

It is understood that one or more of the aforementioned embodiments of the invention may be combined as long as the combined embodiments are not mutually exclusive.

As will be appreciated by one skilled in the art, aspects of the present invention may be embodied as an apparatus, method or computer program product. Accordingly, aspects of the present invention may take the form of an entirely hardware embodiment, an entirely software embodiment (including firmware, resident software, microcode, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon.

Any combination of one or more computer readable medium(s) may be utilized. The computer readable medium may be a computer readable signal medium or a computer readable storage medium. A 'computer-readable storage medium' as used herein encompasses any tangible storage medium which may store instructions which are executable by a processor or computational system of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the computational system of the computing device. Examples of computer-readable storage media include, but are not limited to: a floppy disk, a magnetic hard disk drive, a solid state hard disk, flash memory, a USB thumb drive, Random Access Memory (RAM), Read Only Memory (ROM), an optical disk, a magneto-optical disk, and the register file of the computational system. Examples of optical disks include Compact Disks (CD) and Digital Versatile Disks (DVD), for example CD-ROM, CD-RW, CD-R, DVD-ROM, DVD-RW, or DVD-R disks. The term computer readable-storage medium also refers to various types of recording media capable of being accessed by the computer device via a network or communication link. For example, data may be retrieved over a modem, over the internet, or over a local area network. Computer executable code embodied on a computer readable medium may be transmitted using any appropriate medium, including but not limited to wireless, wire line, optical fiber cable, RF, etc., or any suitable combination of the foregoing.

A computer readable signal medium may include a propagated data signal with computer executable code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

'Computer memory' or 'memory' is an example of a computer-readable storage medium. Computer memory is any memory which is directly accessible to a computational system. 'Computer storage' or 'storage' is a further example of a computer-readable storage medium. Computer storage is any non-volatile computer-readable storage medium. In some embodiments computer storage may also be computer memory or vice versa.

A 'computational system' as used herein encompasses an electronic component which is able to execute a program or machine executable instruction or computer executable code. References to the computational system comprising the example of "a computational system" should be interpreted as possibly containing more than one computational system or processing core. The computational system may for instance be a multi-core processor. A computational system may also refer to a collection of computational systems within a single computer system or distributed amongst multiple computer systems. The term computational system should also be interpreted to possibly refer to a collection or network of computing devices each comprising a processor or computational systems. The machine executable code or instructions may be executed by multiple computational systems or processors that may be within the same computing device or which may even be distributed across multiple computing devices.

Machine executable instructions or computer executable code may comprise instructions or a program which causes a processor or other computational system to perform an aspect of the present invention. Computer executable code for carrying out operations for aspects of the present invention may be written in any combination of one or more programming languages, including an object oriented programming language such as Java, Smalltalk, C++ or the like and conventional procedural programming languages, such as the "C" programming language or similar programming languages and compiled into machine executable instructions. In some instances, the computer executable code may be in the form of a high-level language or in a pre-compiled form and be used in conjunction with an interpreter which generates the machine executable instructions on the fly. In other instances, the machine executable instructions or computer executable code may be in the form of programming for programmable logic gate arrays.

The computer executable code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described with reference to flowchart illustrations and/or block diagrams of methods, apparatus (systems) and computer program products according to embodiments of the invention. It is understood that each block or a portion of the blocks of the flowchart, illustrations, and/or block diagrams, can be implemented by computer program instructions in form of computer executable code when applicable. It is further under stood that, when not mutually exclusive, combinations of blocks in different flowcharts, illustrations, and/or block diagrams may be combined. These computer program instructions may be provided to a computational system of a general purpose computer, special purpose computer, or other programmable data processing apparatus to produce a machine, such that the instructions, which execute via the computational system of the computer or other programmable data processing apparatus, create means for implementing the functions/acts specified in the flowchart and/or block diagram block or blocks.

These machine executable instructions or computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The machine executable instructions or computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

A 'user interface' as used herein is an interface which allows a user or operator to interact with a computer or computer system. A 'user interface' may also be referred to as a 'human interface device.' A user interface may provide information or data to the operator and/or receive information or data from the operator. A user interface may enable input from an operator to be received by the computer and may provide output to the user from the computer. In other words, the user interface may allow an operator to control or manipulate a computer and the interface may allow the computer to indicate the effects of the operator's control or manipulation. The display of data or information on a display or a graphical user interface is an example of providing information to an operator. The receiving of data through a keyboard, mouse, trackball, touchpad, pointing stick, graphics tablet, joystick, gamepad, webcam, headset, pedals, wired glove, remote control, and accelerometer are all examples of user interface components which enable the receiving of information or data from an operator.

A 'hardware interface' as used herein encompasses an interface which enables the computational system of a computer system to interact with and/or control an external computing device and/or apparatus. A hardware interface may allow a computational system to send control signals or instructions to an external computing device and/or apparatus. A hardware interface may also enable a computational system to exchange data with an external computing device and/or apparatus. Examples of a hardware interface include, but are not limited to: a universal serial bus, IEEE 1394 port, parallel port, IEEE 1284 port, serial port, RS-232 port, IEEE-488 port, Bluetooth connection, Wireless local area network connection, TCP/IP connection, Ethernet connection, control voltage interface, MIDI interface, analog input interface, and digital input interface.

A 'display' or 'display device' as used herein encompasses an output device or a user interface adapted for displaying images or data. A display may output visual, audio, and or tactile data. Examples of a display include, but are not limited to: a computer monitor, a television screen, a touch screen, tactile electronic display, Braille screen, Cathode ray tube (CRT), Storage tube, Bi-stable display, Electronic paper, Vector display, Flat panel display, Vacuum fluorescent display (VF), Light-emitting diode (LED) displays, Electroluminescent display (ELD), Plasma display panels (PDP), Liquid crystal display (LCD), Organic light-emitting diode displays (OLED), a projector, and Head-mounted display.

Medical imaging data is defined herein as being recorded measurements made by a medical imaging system descriptive of a subject. The medical imaging data may be reconstructed into a medical image. A medical image id defined herein as being the reconstructed two- or three-dimensional visualization of anatomic data contained within the medical imaging data. This visualization can be performed using a computer.

K-space data is defined herein as being the recorded measurements of radio frequency signals emitted by atomic spins using the antenna of a Magnetic resonance apparatus during a magnetic resonance imaging scan. Magnetic resonance data is an example of tomographic medical image data.

A Magnetic Resonance Imaging (MRI) image or MR image is defined herein as being the reconstructed two- or three-dimensional visualization of anatomic data contained within the magnetic resonance imaging data. This visualization can be performed using a computer.

### BRIEF DESCRIPTION OF THE DRAWINGS

In the following preferred embodiments of the invention will be described, by way of example only, and with reference to the drawings in which:
Fig. 1 illustrates an example of a medical system;
Fig. 2 shows a flow chart which illustrates a method of using the medical system of Fig. 1;
Fig. 3 illustrates a further example of a medical system;
Fig. 4 shows a flow chart which illustrates a method of using the medical imaging system of Fig. 3 or 5;
Fig. 5 illustrates a further example of a medical system;
Fig. 6 shows a flow chart which illustrates a method of using the medical system of Fig. 3 or 5;
Fig. 7 shows a plot of pixel intensity vs frame number;
Fig. 8 shows a further plot of pixel intensity vs frame number;
Fig. 9 shows an image and a pixel state map constructed from the image;
Fig. 10 shows a further image and a pixel state map constructed from the further image;
Fig. 11 illustrates an example of a constructing a motion signal; and
Fig. 12 illustrates the tracking of pixel clusters in sequential pixel state maps.

### DETAILED DESCRIPTION OF EMBODIMENTS

Like numbered elements in these figs. are either equivalent elements or perform the same function. Elements which have been discussed previously will not necessarily be discussed in later figs. if the function is equivalent.

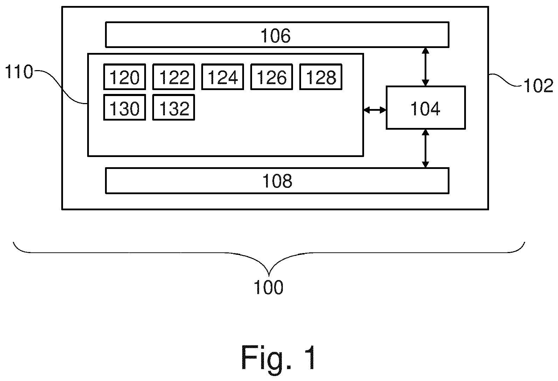

Fig. 1 illustrates an example of a medical system 100. The medical system 100 in Fig. 1 is shown as comprising a computer 102. The computer comprises a computational system 104. The computational system 104 is intended to represent one or more computational or processing systems. For example, the computational system 104 could be multiple processors that are located at one or more locations. The computational system 104 is shown as being optionally connected to a hardware interface 106. The hardware interface 106 may enable the computational system 104 to control and communicate with other components of the medical system 100. The computational system 104 is also shown as being connected to an optional user interface 108. The computational system 104 is further shown as being connected to a memory 110. The memory 110 is intended to represent various types of memory to which the computational system 104 could be connected and capable of communicating with. The memory 110 may include both volatile and non-volatile storage. For example, the contents of the memory 110 could be stored on a hard drive or SSD.

The memory 110 is shown as containing machine-executable instructions 120. The machine-executable instructions 120 enable the computational system 104 to perform various computational tasks such as data manipulation and image processing and reconstruction. The machine-executable instructions 120 may also provide instructions which enable the computational system 104 to control other components. The memory 110 is further shown as containing a stream of acquired images 122. Each of the acquired images in the stream comprise pixels. The stream of acquired images 122 may comprise images acquired at a variety of time points.

The memory 110 is further shown as containing at least one statistical measure for each pixel 124. The at least one statistical measure 124 may for example be a measure of the behavior of the values of pixels in the stream of acquired images 122. For example, the memory 110 is further shown as having a current upper expected value 126 for each pixel and a current lower expected value 128 for each pixel. The upper 126 and lower 128 expected values represent the normal range of values for each of the pixels. The memory 110 is further shown as containing a pixel state map 130. The most recent or current acquired image may have each of its pixels compared to the statistical measure 124 or in another example the current upper 126 and current lower 128 expected values for each pixel. This may then be used to generate the pixel state map 130. The pixel state map 130 may be constructed by using the pixel classification to assign a color or value to a particular pixel or it may be an array where there is an explicit assignment within the array.

The memory 110 is further shown as containing identified pixel clusters 132 that were identified in the pixel state map 130. The generation of the pixel state map 130 may be done repeatedly. The memory 110 is further shown as showing a change in the pixel clusters 134. This may be between the pixel state map 130 and a prior pixel state map. The memory 110 is then shown as containing a motion signal 136 that has been derived from the changes in the pixel clusters 134.

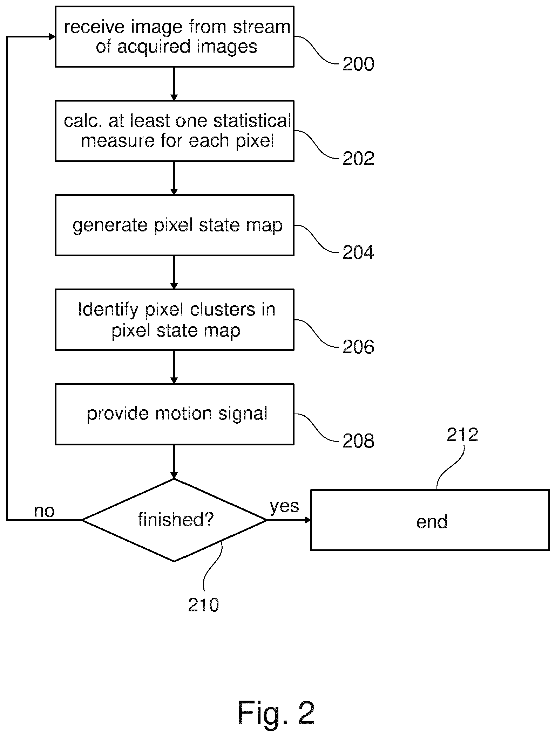

Fig. 2 shows a flowchart which illustrates a method of operating the medical system 100 of Fig. 1. First, in step 200, the stream of acquired images 122 is repeatedly received. Next, in step 202, the at least one statistical measure 124 for each pixel is repeatedly calculated and updated. Next, in step 204, the pixel state map 130 is generated. Then, in step 206, the pixel clusters 132 and the pixel state map 130 are identified. Next, in step 208, the motion signal 136 is provided using the changes 134 in the pixel clusters 132. The method then proceeds to decision box 210. The decision box 210 is used to determine if the method is finished or not. If the method is not finished, then the method returns to step 200. If the method is finished, then the method proceeds to step 212 where the method ends.

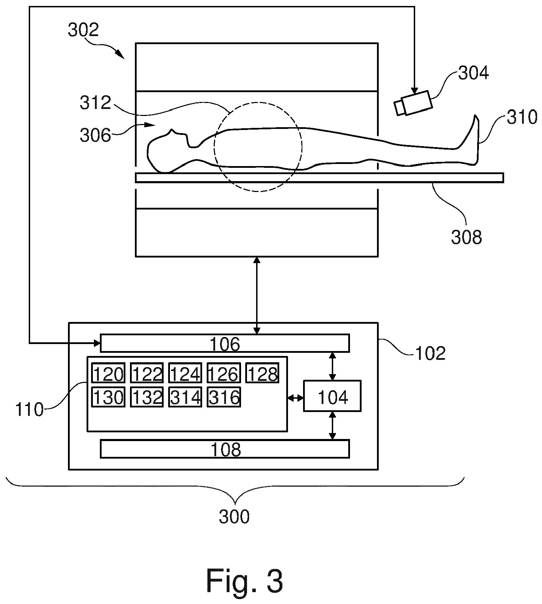

Fig. 3 illustrates a further example of a medical system 300. The medical system 300 of Fig. 3 is similar to the medical system 100 of Fig. 1 except that it is additionally shown as comprising a medical imaging system 302. The medical imaging system 302 is intended to represent one of any number of different tomographic imaging medical systems. For example, the medical imaging system 302 could be a magnetic resonance imaging system, a positron emission tomography system, a computed tomography system, or a single photon emission tomography system.

The medical imaging system 302 is shown as having a bore 306 that has a subject support 308 supporting a subject 310 at least partially within an imaging zone 312. The camera system 304 is set up to image at least a portion of the imaging zone 312. In this example the camera 304 is able to image the subject 310 directly. In other cases, the subject 312 may be covered or the view of the subject 310 by the camera system 304 may be obscured. Movement by the subject 310 will cause changes in the stream of images 122 recorded by the camera system 304.

The medical imaging system 302 and the camera system 304 are shown as being connected to the hardware interface 106. This enables the computational system 104 to receive data from both and also to control their operation. The stream of acquired images 122 is received from the camera system 304.

The memory 110 is further shown as containing medical imaging data 314 that was acquired using the medical imaging system 302. The motion signal 136 is correlated in time with the medical imaging data 314. The memory 110 is further shown as containing a medical image 316 that was reconstructed from the medical imaging data 314. During the reconstruction of the medical image 316 from the medical imaging data 314 the motion signal 136 was used. The medical imaging data 314 could for example have been gated or portions of the medical imaging data 314 could have been rejected due to excess motion of the subject 310 being detected.

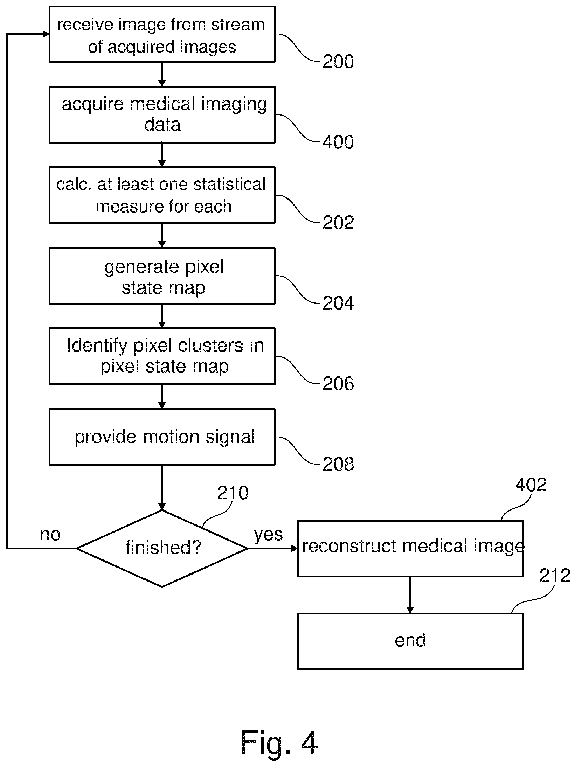

Fig. 4 shows a flowchart which illustrates a method of operating the medical system 300 of Fig. 3. The method in Fig. 4 is similar to the method illustrated in Fig. 2. After step 200 of Fig. 2, step 400 is performed. In step 400 the medical imaging data 314 is acquired by controlling the medical imaging system 302. The acquisition or the receiving of the stream of acquired images 122 is shown as coming before step 400. However, the acquisition of the medical imaging data 314 occurs at the same time as the receiving the stream of acquired images 122. Steps 200 and 400 may be performed in any order or performed simultaneously. After step 400, the method then proceeds to steps 200, 202, 204, 206, and 208 as was illustrated in Fig. 2.

After step 208 the method then proceeds to decision box 210. If the acquisition of data is not finished the method then returns back to step 200. If the acquisition is finished the method proceeds to step 402. In step 402 the medical image 316 is reconstructed from the medical imaging data 314 using the motion signal 136. As was mentioned before, the motion signal 136 can for example be used to gate the medical imaging data 314 and also possibly to reject portions of the medical imaging data 314 to reduce the amount of motion artifacts in the medical image 316.

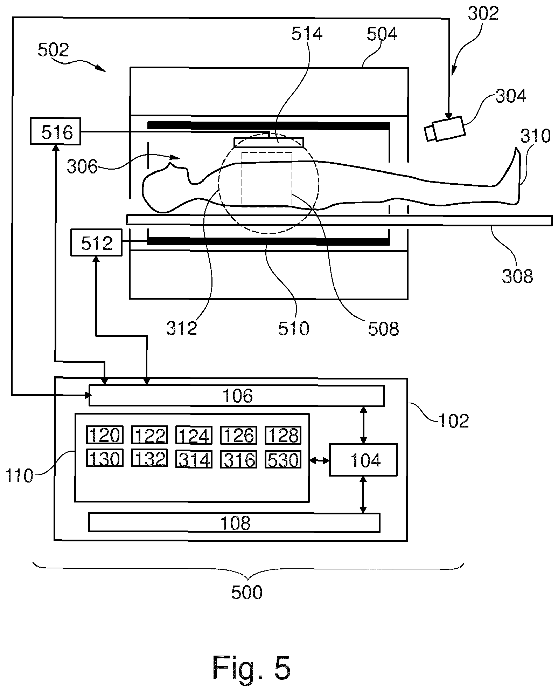

Fig. 5 illustrates a further example of the medical system 500. The medical system in Fig. 5 is similar to the medical system 300 illustrated in Fig. 3 except in this instance the medical imaging system is a magnetic resonance imaging system 502.

The magnetic resonance imaging system 502 comprises a magnet 504. The magnet 504 is a superconducting cylindrical type magnet with a bore 506 through it. The use of different types of magnets is also possible; for instance it is also possible to use both a split cylindrical magnet and a so called open magnet. A split cylindrical magnet is similar to a standard cylindrical magnet, except that the cryostat has been split into two sections to allow access to the iso-plane of the magnet, such magnets may for instance be used in conjunction with charged particle beam therapy. An open magnet has two magnet sections, one above the other with a space in-between that is large enough to receive a subject: the arrangement of the two sections area similar to that of a Helmholtz coil. Open magnets are popular, because the subject is less confined. Inside the cryostat of the cylindrical magnet there is a collection of superconducting coils.

Within the bore 506 of the cylindrical magnet 504 there is an imaging zone 312 where the magnetic field is strong and uniform enough to perform magnetic resonance imaging. A region of interest 508 is shown within the imaging zone 318. The magnetic resonance data that is acquired typically acquried for the region of interest. A subject 310 is shown as being supported by an optional subject support 308 such that at least a portion of the subject 310 is within the imaging zone 312 and the region of interest 508.

Within the bore 506 of the magnet there is also a set of magnetic field gradient coils 510 which is used for acquisition of preliminary magnetic resonance data to spatially encode magnetic spins within the imaging zone 312 of the magnet 504. The magnetic field gradient coils 510 connected to a magnetic field gradient coil power supply 512. The magnetic field gradient coils 510 are intended to be representative. Typically magnetic field gradient coils 510 contain three separate sets of coils for spatially encoding in three orthogonal spatial directions. A magnetic field gradient power supply supplies current to the magnetic field gradient coils. The current supplied to the magnetic field gradient coils 510 is controlled as a function of time and may be ramped or pulsed.

Adjacent to the imaging zone 312 is a radio-frequency coil 514 for manipulating the orientations of magnetic spins within the imaging zone 312 and for receiving radio transmissions from spins also within the imaging zone 312. The radio frequency antenna may contain multiple coil elements. The radio frequency antenna may also be referred to as a channel or antenna. The radio-frequency coil 514 is connected to a radio frequency transceiver 516. The radio-frequency coil 514 and radio frequency transceiver 516 may be replaced by separate transmit and receive coils and a separate transmitter and receiver. It is understood that the radio-frequency coil 514 and the radio frequency transceiver 516 are representative. The radio-frequency coil 514 is intended to also represent a dedicated transmit antenna and a dedicated receive antenna. Likewise the transceiver 516 may also represent a separate transmitter and receivers. The radio-frequency coil 514 may also have multiple receive/transmit elements and the radio frequency transceiver 516 may have multiple receive/transmit channels. For example if a parallel imaging technique such as SENSE is performed, the radio-frequency could 514 will have multiple coil elements.

The transceiver 516, the gradient controller 512, and the camera system 304 are shown as being connected to the hardware interface 106 of a computer system 102.

The memory 110 is shown as further containing pulse sequence commands 530. The pulse sequence commands are commands or data which may be converted into such commands that can be used to control the magnetic resonance imaging system to acquire k-space data. In this instance the k-space data is the medical imaging data 314. The medical image 316 is a magnetic resonance image.

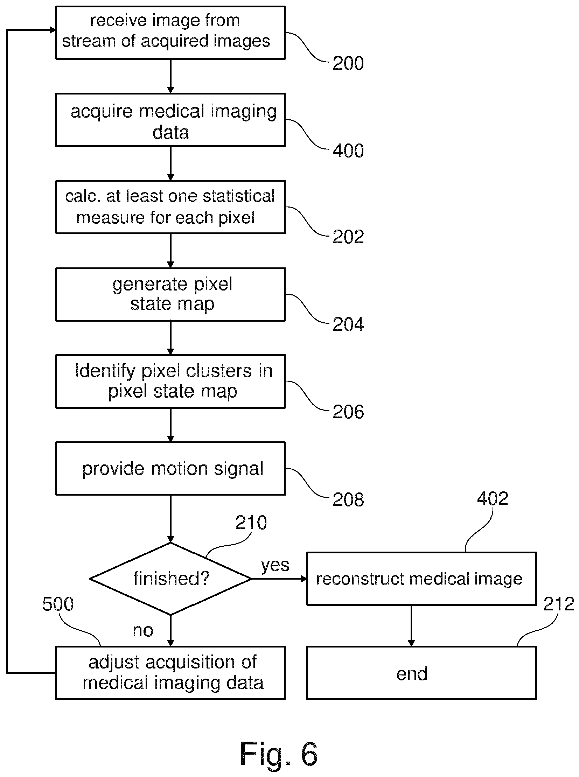

Fig. 6 shows a flowchart which illustrates a further method of operating the medical imaging system 300 of Fig. 3 or the medical imaging system 500 of Fig. 5. The method illustrated in Fig. 6 is similar to the method illustrated in Fig. 4; there is however an additional step which has been added. After decision box 210 if further acquisition of the data is desired the method proceeds to step 500. In step 500 the acquisition of the medical imaging data 314 is adjusted using the motion signal 136. The method then proceeds back to step 200 as was illustrated in Fig. 4. In Fig. 6 the motion signal 136 is then used in controlling the magnetic resonance imaging system 502 or medical imaging system 302 to adjust the acquisition of the medical imaging data 314. This forms a closed control loop. The motion signal 136 for example could be used to reacquire portions of the medical imaging data 314. It could also be used to adjust the region of interest 508. The motion signal 136 could for example be used as a signal similarly to a respiratory belt or may also provide data which could be used to replace a magnetic resonance imaging navigator.

Examples may provide for a method for detecting very small changes in digital videos (stream of acquired images 122); the detection can happen in real time and the changes may randomly occur at any moment in time and at any position in the video images (unpredictable and non-periodic events). This method may, for example, be used to augment Magnetic Resonance or Computer Tomography examinations in combination with a camera, to automatically identify patient (subject 310) movements (including subtle ones such as swallowing) during the MR / CT examinations, even from a limited view on the patient. Certain patient movements may corrupt the final medical images and therefore, real-time detecting them during the examination, allows mitigating their influence on the final medical images.

In Magnetic Resonance Imaging (MRI), medical images of a specified inner body part of the patient are generated by processing the data acquired (medical imaging data 314 or k-space data) during the MR examination. The data-acquisition process is complex and it can last up to half an hour. During all this time the different areas of the specified inner body part are scanned, one at a time and following an order determined by the scan type itself. In some scan types, the images are acquired progressively; this is, first the low frequency components of each image slice are acquired, then the higher frequency components of each image slice and so on. When acquiring data in this way, even a single motion event can corrupt multiple images (or even all of them). It is therefore critical that the patient remains in the same position throughout the entire examination, in order to generate clear and sharp medical images. The exact order of data acquisition depends on the scan type but, in general, it is not sequential (where one full image is acquired after another one).

Unfortunately, some patient movement such as coughing or muscle twitching is sometimes inevitable. If such motion events can be detected as soon as they occur, it may be possible to act accordingly and mitigate the motion-corruption effects on the medical images (e.g. by discarding some data and reacquiring it). Currently many incidental motion events go unnoticed thereby degrading the quality of the generated medical images. Sometimes, the image quality impact of the motion is only noticed during reading, i.e after completion of the imaging exam. In that case, the images cannot be re-acquired at all and the diagnostic quality may be compromised.

Examples may aid in improving the real-time detection of incidental motion events in MR examinations. With the purpose of detecting such events, automatic camera-based solutions are being explored. Automatic camera-based solutions are highly desirable because they are safe, non-invasive and do not compromise the workflow. State-of-the-art MR devices 502 may already include a camera for patient monitoring (for example a monochrome camera with IR LED illumination), which is intended to automatically monitor breathing of the patient. The camera system can be reused for detecting incidental motion, together with an appropriate motion-detection video processing algorithm.

There are two main kinds of motion-detection algorithms, feature-based tracking methods and instantaneous difference methods. Even though they both extract the movement by comparing two frames and searching for displacements, they follow a different approach.
- In feature-based tracking algorithms, the image is analyzed searching for features that can be easily identified (e.g. edges); these features found in one frame are then searched is the other frame (typically within a small neighborhood) and then the displacement can be computed. This results in a movement map; the individual movements can be subsequently combined into aggregated movement signals.
- In instantaneous-difference methods, the frames are compared pixel by pixel; the pixels whose difference is larger than a threshold, are considered to capture movement. This results in a mask-like image, often with holes and very small regions due to noise; this mask is often post-processed to provide a smooth motion mask image. The images are sometimes also pre-processed, mainly with spatial filters (single frame-based).

Due to the physical location of some MRI camera systems, often at the back of the MR device, only a small part of the patient may be visible (in head examinations, for instance, only a small part of the face may be visible through a mirror). This is relevant if using a camera for detecting motion. Regarding the integration of the motion-detection algorithm with the MR data acquisition process, the delay in detecting the motion must be very small (real-time motion detection), since the MR examination may be adapted on the fly and it may be beneficial to identify the data that was acquired during the motion event.

When using a camera for motion detection in MR, the limited view on the patient can be a constraint for feature-based motion detection algorithms. In general, it cannot be guaranteed that there will be enough positional information (i.e. features or recognizable points) to rely on feature-based algorithms.

On the other hand, instantaneous-difference methods can detect variations in images also when there is no positional information. However, due to the subtleness of the movements that are targeted in MR, some movements may not be distinguishable from noise (sensitivity issues).

Examples may provide for a method that allows detecting very subtle motion in digital video without relying on feature extraction. This method also overcomes the limitations of instantaneous-difference methods by analyzing a plurality of frames instead of only two frames (as in state-of-the-art instantaneous-difference methods); furthermore, the pixels are processed independently, which allows to locally adapt the analysis to the current behavior of each pixel. Based on the results of the individual pixel analyses, pixel clusters 132 can be defined and, from both the individual pixel information and the cluster information, the final motion information (motion signal 136) can be extracted.

Some examples herein presented may be referred to as pixelROI (PIXEL-accurate automatic Region Of Interest selection). pixelROI is a motion-detection algorithm, meant to process a single-channel video stream (e.g. a sequence of greyscale images). The algorithm identifies different variations in elements in the video stream. "Elements" are clusters of pixels that represent physical objects from the image (or part of them), that are subjected to a similar variation. "Variations" means any change in the elements; this can be a translation, a change of intensity, a deformation, or a combination of all of them. Examples may benefit from the fact that pixels are analyzed as time-domain signals and individually, which allows adapting the analysis according to the actual behavior (i.e. the instantaneous characteristics of the time-domain signal) of each pixel. As a result of the individual analysis, each pixel can be assigned a state (a label indicating the current type of pixel behavior), which allows easily classifying and/or clustering pixels according to their behavior. Note that even adjacent pixels may behave differently and therefore different analyses would be applied to them.

These states can then be combined to compute a motion signal 136 that is streamed in real-time to the MR scanner (MRI system 502), where it is processed to control the data acquisition and reconstruction processes. For example, the signal will trigger an invalidation of the acquired data in case of significant motion, or a pause of the data acquisition.

Analyzing pixels individually: Per pixel, an intensity signal may for example be created by concatenating the last N intensity values. From this intensity signal, the current pixel state is to be determined. When a pixel is not capturing any variation, this signal is stable. Stable means that it randomly oscillates around a central value and within a bounded noise range. The central value and the bounded range can be determined in different ways:
- Calculating the statistical modes (at least one statistical measure 124) within a time window and extracting the most frequent values; the largest and the smallest most frequent values determine the noise range and their central value is the mean M.
- Calculating, within a time window, the mean M and the most frequent absolute difference J between consecutive samples. The noise range is then M +/- J.

A feasible way to determine whether the pixel is stable or not is to fit a first-order polynomial within a small window L. If the pixel is stable, the slope of this polynomial will oscillate around zero. If the pixel is increasing (decreasing) the slope will be positive (negative), for as many samples as the pixel remains in this behavior. Therefore, if the integration of consecutive slope values of the same signal exceeds a certain value, then the pixel is increasing or decreasing. On the contrary, when the slope reverses, the pixel is stable.

In addition, this criterion can be complemented with other criteria, such as the instantaneous value being widely different compared to the central value or too many consecutive values above or below the bounded noise range.
The number of states can be adapted depending on the precision required. For now, let us assume a system with five different states:
- Stable: the average intensity value of the pixel is stable over time and the instantaneous value is within the noise range (between the upper expected value 126 and lower expected value 128).
- Flat +: the average intensity value of the pixel is stable over time but the instantaneous value is above the noise range.
- Flat -: the average intensity value of the pixel is stable over time but the instantaneous value is below the noise range.
- Increasing: the intensity value of the pixel follows an increasing trend.
- Decreasing: the intensity value of the pixel follows a decreasing trend.

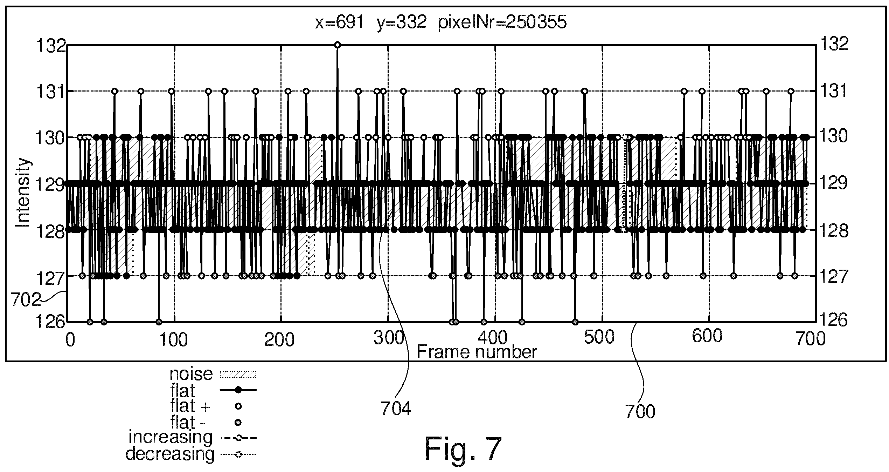

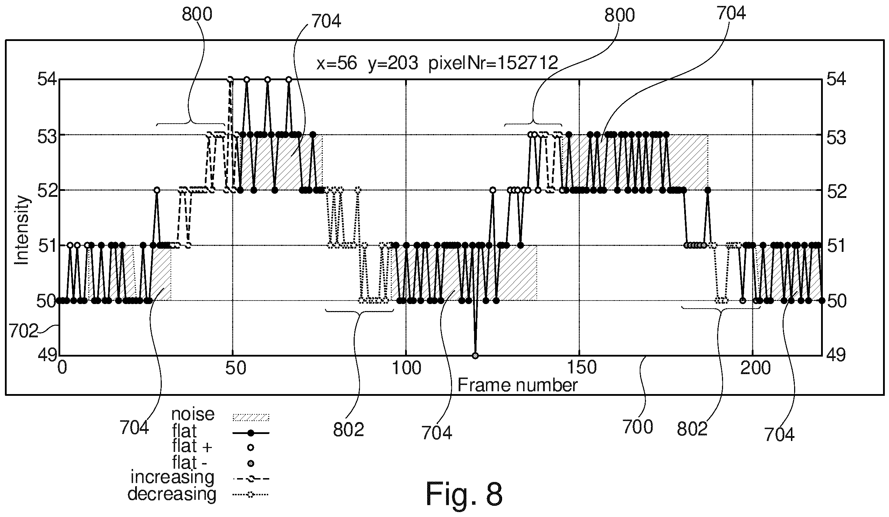

Figs. 7 and 8 use images to illustrate of the analysis of different pixels and labelling, in the different pixel states.

Fig. 7 shows a plot of a frame number 700 versus pixel intensity 702. In Fig. 7 the pixel value is stable or flat. The shaded region, 704, illustrates the regions where the pixel is within the noise range. It can be seen that some measurements are outside of the noise range but this is only temporarily and it may not lead to increasing or decreasing trends in the pixel value.

Fig. 8 shows a further example of a frame number 702 versus intensity plot 702 for a single pixel. There are again some regions where the pixel value is within the noise range 704, however, there are two increasing regions 800 and two decreasing regions 802. Figs. 7 and 8 illustrate how changes in the pixel value can be used to assign a pixel classification when generating a pixel state map.

An example of a pixel capturing a periodic variation is shown in Fig. 8 and a pixel capturing a stable behavior is shown in Fig. 7.

From the labels of individual pixels, a map of pixels (pixel state map 130) can be created, which aids in identifying which pixels are capturing similar variations. Here are a few examples in different conditions.

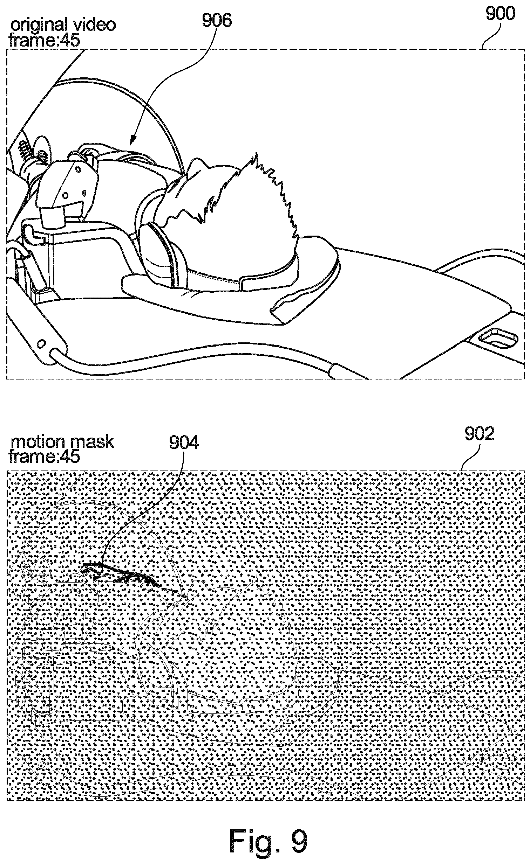

Fig. 9 illustrates a pixel state map 902 with a pixel cluster 904 caused by breathing. In Fig. 9 there is an image 900 from the stream of acquired images 122. Below the image 900 is the pixel state map 902. The pixel state map 902 was constructed from the image 900. In the image 900 there is a chest 906 of the subject. Breathing by the subject causes the chest 906 to move up and down. This has caused a pixel cluster 904 in the pixel state map 902. The motion of the pixel cluster 904 in subsequent pixel state maps 902 could for example be used to measure or trace the breathing motion of the subject. In the example of Fig. 9, chest motion was directly detected. However, most of the chest wall is obscured by a shoulder coil. The example in Fig. 9 illustrates how the system will function with a minimal amount of the subject being imaged.

The system will also function when making indirect measurements. For example, this will also function if an object such as a surface coil is resting on the chest 906 of the subject. The chest wall would be completely obscured, but breathing could still be detected by imaging motion of the surface coil.

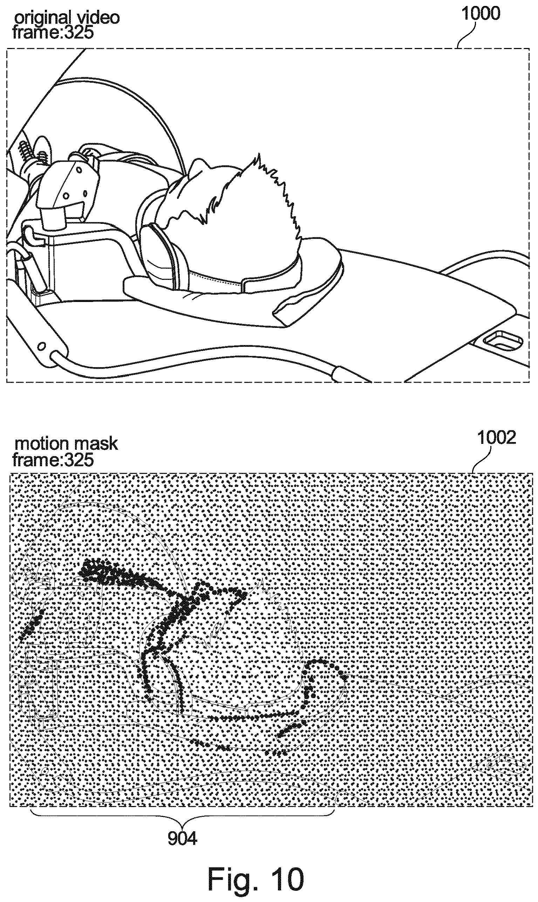

Fig. 10 again shows an image 1000 from the stream of acquired images 122. In this example the subject was coughing. Examining the pixel state map 1002 an outline of the subject is visible. This is because during the coughing the subject moved his entire body. Comparing the pixel state map 1002 and the pixel state map 902 it can be seen that also the size and the shape of the pixel clusters can be used to classify the type of motion.

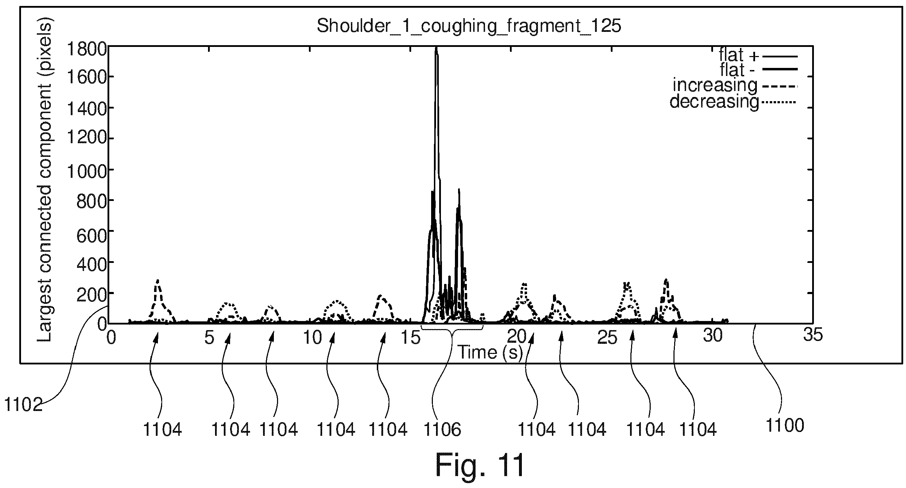

Fig. 11 shows a plot of time 1100 versus the largest connected component 1102 for a series of pixel state maps 130. In this example there were five pixel classifications that were used: a flat classification, a flat with some increasing values classification, a flat with some negative values, an increasing classification and a decreasing classification. In this plot the flat classification is not considered. However, for the other four classifications the largest connected component or a pixel cluster that is connected and has the same classification is plotted. It can be seen that within the plot there are changes due to breathing motion 1104. In the center of the plot the disturbances are much larger and this represents coughing motion 1106. Fig. 11 illustrates how the motion can be classified in some cases, for example differences between the breathing motion 1104 and the coughing motion 1106, as well as providing a reliable breathing signal. The areas indicated by the breathing motion 1104 could for example be used to replace a respiration belt or a navigator signal.

The signal illustrated in Fig. 11 and the signal from a respiration belt are related but not directly comparable. The signal from a respiration belt monitors the size of the chest. It is maximum at the moment of maximum inhalation and it stays high for as long as the patient stays at maximum inhalation. The signal of Fig. 11 shows the largest connected component of moving entities. This signal is maximum at (more or less) the moment of fastest motion. The flat+ and the increasing signals are therefore maximum around the middle of an inhalation and the flat- and the decreasing signals are maximum around the middle of an exhalation. This resembles the derivative of a respiration belt signal.

Using this information one can construct a respiration belt-like signal from the signal of Fig. 11. One may achieve this by: inverting the flat- and decreasing pixel signals (to get the negative sign), combining these inverted signals with the flat+ and increasing pixel signals, and then integrate this combined signal. The integrated signal will then approximate the signal from a respiration belt.

Identifying moving elements (clustering pixels): From the pixel maps, identifying the moving elements in the image is simple. As Figs. 7 through 10 illustrate, moving elements result in clusters of pixels (with the same state) which are much larger than the clusters due to noise. Indeed, by simply plotting the size of the largest connected component per frame and state, the breathing and coughing events can be clearly identified. Therefore, from the state maps, the moving elements can be found by searching for large connected components (above a specified threshold).

Note that this identification is instantaneous (based on a single frame). If a delay is acceptable, a more selective criterion can be used as well (e.g. require the element to be present in multiple consecutive frames).

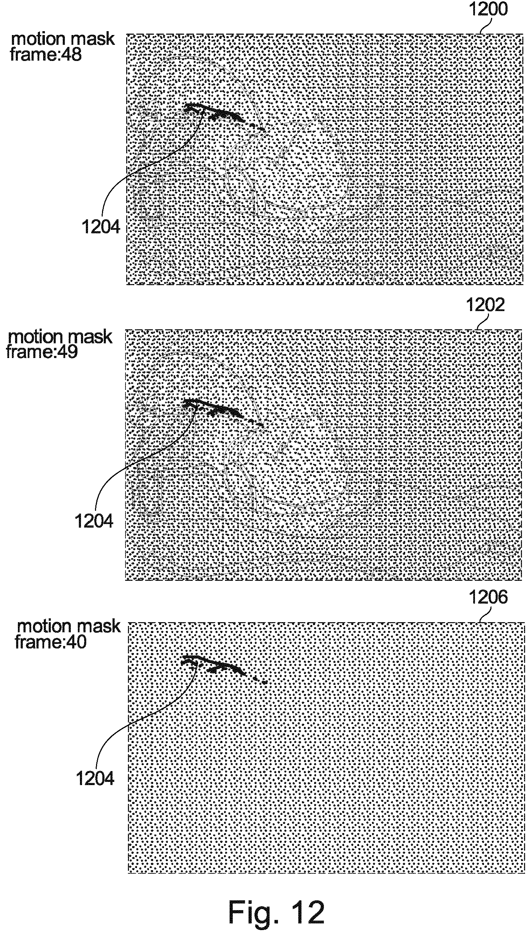

Tracking moving elements over multiple frames: The identified elements can be tracked across multiple frames, if the framerate is sufficient in relation to the movement speed. In such a case, the moving elements have a similar shape and position in consecutive frames (Fig. 12 illustrates this by comparing the status maps of two consecutive frames). Tracking the moving elements can be then done by using state-of-the-art tracking algorithms, even though simpler approaches would be sufficient for many cases.

Fig. 12 shows two sequential pixel state maps 1200 and 1202. In the pixel state maps 1200 and 1202 the same pixel cluster 1204 is visible. Fig. 12 illustrates the tracking of a pixel cluster 1204 or motion between frames. The image 1206 below shows a difference between the two frames 1200 and 1202. Fig. 12 compares the pixels state maps of frames 48 and 49, which belong to the same recording than in figs. 2 and 3 (top images). On the bottom showing the differences between both frames: the pixels whose state is not flat and the other pixels.

Once a moving element is identified across multiple frames, different motion-related features can be extracted:
- Coordinates of the topmost/bottommost/leftmost/bottommost pixel
- Coordinates of the centroid
- Number of pixels (i.e. area)
- Size of the smallest bounding box containing the whole element
- Average intensity signal (average of all pixels from this element)

The motion signal may be streamed to a control system to control data acquisition and image reconstruction. The above motion features can be streamed to the control unit of the imaging system (MRI or CT). Also, the time stamps corresponding to the motion features can be provided, so that the control unit can analyze whether motion occurred during data acquisition and, if yes, which data were impacted. Based on this information, the control unit can invalidate the data and trigger re-acquisition at a later point. Additionally, or alternatively, the control unit can pause data acquisition until a suitable motion state is reached. In another embodiment, the motion features and their time stamps are used during the reconstruction of the images, for example to apply motion correction techniques or to weight data samples according to the detected motion state.

In case motion occurred and the state after motion is significantly different than before, the control unit can trigger acquisition of motion tracking data, to compute for example rotation and translation characterizing the motion of the anatomical area being imaged. These parameters allow adapting the geometry of the data acquisition (i.e. for MR: the shape of the encoding gradients) so as to correct for the motion. To enable this, a reference MRI navigator could be acquired in advance to provide a reference to the original motion state.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

### REFERENCE SIGNS LIST

- 100: medical system
- 102: computer
- 104: computational system
- 106: hardware interface
- 108: user interface
- 110: memory
- 120: machine executable instructions
- 122: stream of acquired images
- 124: statistical measure for each pixel
- 126: current upper expected value for each pixel
- 128: current lower expected value for each pixel
- 130: pixel state map
- 132: pixel clusters
- 134: changes in pixel clusters
- 136: motion signal
- 200: repeatedly receive a stream of acquired images descriptive of a subject
- 202: repeatedly calculate at least one statistical measure for each of the pixels
- 204: repeatedly generate a pixel state map for each of the sequentially acquired images by assigning a pixel classification to each of the pixels by comparing each of the pixels to the least one statistical measure
- 206: repeatedly identify pixel clusters in the pixel state map for each of the sequentially acquired images
- 208: repeatedly provide a motion signal by identifying changes in the pixel clusters between the sequentially acquired images
- 210: finished?
- 300: medical system
- 302: medical imaging system
- 304: camera system
- 306: bore
- 308: subject support
- 310: subject
- 312: imaging zone
- 314: medical imaging data
- 316: medical image
- 400: acquire medical image data
- 402: reconstruct medical image
- 502: magnetic resonance imaging system
- 504: magnet
- 506: bore of magnet
- 508: region of interest
- 510: magnetic field gradient coils
- 512: magnetic field gradient coil power supply
- 514: radio-frequency coil
- 516: transceiver
- 518: subject
- 520: subject support
- 530: pulse sequence commands
- 600: control acquisition of the medical image data using the motion signal
- 700: frame number
- 702: intensity
- 704: shaded region
- 800: increasing region
- 802: decreasing region
- 900: image from stream of acquired images
- 902: pixel state map
- 904: pixel cluster
- 906: chest region of subject
- 1000: image from stream of acquired images
- 1002: pixel state map
- 1100: time
- 1102: largest connected component
- 1104: breating motion
- 1106: coughing motion
- 1200: first pixel state map
- 1202: second pixel state map
- 1204: pixel cluster

## Claims

1. A medical system (100, 300, 500) comprising:
- a memory (110) storing machine executable instructions (120);
- a computational system (104), wherein execution of the machine executable instructions causes the computational system to:
- repeatedly receive (200) a stream of acquired images (122) descriptive of a subject (310), wherein each of the acquired images is formed from pixels;
- repeatedly calculate (202) at least one statistical measure (124) for each of the pixels;
- repeatedly generate (204) a pixel state map (130, 902, 1002, 1200, 1202) for each of the sequentially acquired images by assigning a pixel classification to each of the pixels by comparing each of the pixels to the least one statistical measure;
- repeatedly identify (206) pixel clusters (132, 904, 1204) in the pixel state map for each of the sequentially acquired images; and
- repeatedly provide (208) a motion signal (136) by identifying changes in the pixel clusters between the sequentially acquired images.

2. The medical system of claim 1, wherein execution of the machine executable instructions further causes the computational system to repeatedly provide a motion classification using any one of the following: a size of the pixel clusters, a shape of the pixel clusters, a change in the number of pixel clusters, a position change of the pixel clusters, and combinations thereof.

3. The medical system of claim 1 or 2, wherein the pixel state map is constructed as an intermediate image (902, 1002, 1200, 1202) for each of the acquired images, wherein the identification of the clusters of the pixels in the intermediate image is performed using an image segmentation algorithm.

4. The medical system of claim 3, wherein the motion signal is provided by tracking movement of the pixel clusters or groups of pixel clusters in sequential intermediate images (1200, 1202)

5. The medical system of claim 3, wherein the motion signal is a time series (1100) of a size of the largest cluster identified in the intermediate image.

6. The medical system of any one of the preceding claims, wherein the at least one statistical measure comprises an upper expected value (128) and a lower expected value (126).

7. The medical system of any one of claim 6, wherein the pixel classification comprises any one of the following:
- a stable classification;
- an increasing trend classification indicating an increasing trend that is longer in duration than a predetermined time interval;
- a decreasing trend classification indicating a decreasing trend that is longer in duration than the predetermined time interval;
- a flat but increasing trend classification indicating an increasing trend but shorter in duration than a predetermined time interval;
- a flat but decreasing trend classification indicating a decreasing trend but shorter in duration than the predetermined time interval;
- a recurrent variation; and
- combinations thereof.

8. The medical system of any one of the preceding claims wherein, the upper expected value and the lower expected value are calculated using any one of the following:
- applying a statistical model to a predetermined time window and extracting the most frequent values; and
- calculating a mean value within the predetermined time window and determining the upper expected value and the lower expected value as a difference between the mean value and a most frequent absolute difference between consecutive samples.

9. The medical system of any one of the preceding claims, wherein the computational system is configured to repeatedly receive a stream of multiple images, wherein any one of the following:
- execution of the machine executable instructions causes the computational system to repeatedly calculate a single channel image stream from the stream of multiple images, wherein the computational system is configured to process the single channel image stream as the stream of acquired images; and
- the computational system is configured to process each channel of the stream of multiple images independently as the stream of acquired images, wherein the motion signal is at least partially provided by calculating a correlation between the pixel clusters of each channel of the stream of multiple images.

10. The medical system of any one of the preceding claims, wherein the medical system further comprises a camera system (304) configured for acquiring the stream of acquired images.

11. The medical system of any one of the preceding claims, wherein the medical system further comprises a medical imaging system (302, 502) configured for acquiring (400) medical imaging data from a subject within an imaging zone, wherein the camera is configured for imaging at least a portion of the imaging zone or for imaging a portion of the subject when the subject is at least partially within the imaging zone.

12. The medical system of claim 11, wherein execution of the machine executable instructions further causes the processor to reconstruct (402) a medical image (316) from the medical imaging data, wherein the processor is configured to modify the reconstruction of the medical image using the motion signal.

13. The medical system of claim 11 or 12, wherein the medical imaging system is a magnetic resonance imaging system, wherein the medical imaging data is k-space data, wherein the computational system is configured to provide the motion signal in real time during acquisition of the k-space data, wherein the magnetic resonance imaging system is configured to control (600) the acquisition of the k-space data using the motion signal.

14. A method of medical imaging, the method comprising:
- repeatedly receiving (200) a stream of acquired images (122) descriptive of a subject, wherein each of the acquired images is formed from pixels;
- repeatedly calculating (202) at least one statistical measure (124) for each of the pixels;
- repeatedly generating (204) a pixel state map (130, 902, 1002, 1200, 1202) for each of the sequentially acquired images by assigning a pixel classification to each of the pixels by comparing each of the pixels to the at least one statistical measure;
- repeatedly identifying (206) pixel clusters (132, 904, 1204) in the pixel state map for each of the sequentially acquired images; and
- repeatedly providing (208) a motion signal (136) by identifying changes in the pixel clusters between the sequentially acquired images.

15. A computer program comprising machine executable instructions (120) for execution by a computational system (104) controlling a medical system (100, 300, 500), wherein execution of the machine executable instructions causes the computational system to:
- repeatedly receive (200) a stream of acquired images (122) descriptive of a subject (310), wherein each of the acquired images is formed from pixels;
- repeatedly calculate (202) at least one statistical measure (124) for each of the pixels;
- repeatedly generate (204) a pixel state map (130, 902, 1002, 1200, 1202) for each of the sequentially acquired images by assigning a pixel classification to each of the pixels by comparing each of the pixels to the at least one statistical measure;
- repeatedly identify (206) pixel clusters (132, 904, 1204) in the pixel state map for each of the sequentially acquired images; and
- repeatedly provide (208) a motion signal (136) by identifying changes in the pixel clusters between the sequentially acquired images.
